# EUROPÄISCHE PATENTANMELDUNG

(11) **EP 2 242 002 A2**
(43) Veröffentlichungstag der Anmeldung: **20.10.2010**
(21) Anmeldenummer: 10002691.3
(22) Anmeldetag: 15.03.2010
(51) Int. Cl.: G06K 19/073

(54) **Absichern eines von einem portablen Datenträger gesendeten Datensignals**

(30) Priorität: 16.03.2009 DE 102009013158
(71) Anmelder: Giesecke & Devrient GmbH, 81677 München (DE)
(72) Erfinder: Finkenzeller, Klaus, 85774 Unterföhring (DE); Schmidtke, Rainer, 82008 Unterhaching (DE)

(57) **Zusammenfassung**

Gemäß einem Verfahren auf einem portablen Datenträger (1) wird Energie mittels einer Energieempfangseinrichtung (30, 31) empfangen und ein Datensignal mittels einer optischen Datensendeeinrichtung (11) unter Verwendung der empfangenen Energie gesendet. Dabei wird ein Stromverbraucher (13) derart angesteuert, dass aus einem gemeinsamen Stromverbrauch der optischen Datensendeeinrichtung (11) und des Stromverbrauchers (13) das mit der optischen Datensendeeinrichtung (11) gesendete Datensignal nicht ableitbar ist.

## Beschreibung

Die vorliegende Erfindung betrifft ein Verfahren auf einem portablen Datenträger zum Senden eines Datensignals mittels einer optischen Datensendeeinrichtung sowie einen derartigen portablen Datenträger.

Gemäß der DE 103 17 257 A1 und der DE 10 2004 058 165 A1 können portable Datenträger mit Kontaktlosschnittstelle, wie z.B. kontaktlose Chipkarten oder dergleichen, zusätzlich mit einer Infrarotschnittstelle ausgestattet werden, die zum Senden und/ oder Empfangen von Datensignalen über die Kontaktlosschnittstelle empfangene Energie nutzt. Die zusätzliche und von der Kontaktlosschnittstelle getrennte Infrarotschnittstelle, die z.B. in Form einer IR-Diode vorliegen kann, kann z.B. derart in Kombination mit der Kontaktlosschnittstelle genutzt werden, dass ein Angreifer die Sicherheitseigenschaften beider Datenübertragungskanäle überwinden muss.

Durch das Ein- und Ausschalten einer IR-Sendediode ändert sich jedoch der Verbrauch der über die Kontaktlosschnittstelle bereitgestellten Energie, was eine Lastmodulation des Funkfeldes bewirkt, aus dem die Energie empfangen wird. Diese ungewollte Lastmodulation könnte demzufolge im Rahmen eines Angriffs auf den Datenträger detektiert werden, um dadurch die über die Infrarotschnittstelle gesendeten Datensignale mittelbar mitzulesen. Ein solcher DPA-Angriff ("Differential Power Analysis") wäre mit verhältnismäßig geringem Aufwand durchführbar und würde die in der DE 103 172 57 A1 beschriebene Trennung der Kontaktlosschnittstelle von der Infrarotschnittstelle völlig umgehen.

Aufgabe der vorliegenden Erfindung ist es daher, eine optische Übertragung von Datensignalen unter Nutzung von über eine Kontaktlosschnittstelle empfangener Energie hinreichend abzusichern.

Diese Aufgabe wird durch ein Verfahren sowie einen Datenträger mit den Merkmalen der unabhängigen Patentansprüche gelöst. In den davon abhängigen Ansprüchen sind vorteilhafte Ausgestaltungen und Weiterbildungen der Erfindung angegeben.

Ein erfindungsgemäßes Verfahren auf einem portablen Datenträger umfasst ein Empfangen von Energie mittels einer Energieempfangseinrichtung, ein Senden eines Datensignals mittels einer optischen Datensendeeinrichtung unter Verwendung der empfangenen Energie, wobei ein Stromverbraucher des Datenträgers mittels einer Steuereinrichtung derart angesteuert wird, dass aus einem gemeinsamen Stromverbrauch der optischen Datensendeeinrichtung beim Senden eines Datensignals und des Stromverbrauchers das mit der optischen Datensendeeinrichtung gesendete Datensignal nicht ableitbar ist.

Dementsprechend umfasst ein erfindungsgemäßer portabler Datenträger eine Energieempfangseinrichtung zum Empfangen von Energie, eine optische Datensendeeinrichtung zum Senden eines Datensignals unter Verwendung der empfangenen Energie, einen Stromverbraucher, sowie eine Steuereinrichtung, die eingerichtet ist, den Stromverbraucher während eines Sendens eines Datensignals durch die Datensendeeinrichtung derart anzusteuern, dass aus einem gemeinsamen Stromverbrauch der optischen Datensendeeinrichtung und des Stromverbrauchers das mit der Datensendeeinrichtung gesendete Datensignal nicht ableitbar ist.

Hierbei entzieht zwar die Energieempfangseinrichtung einem elektromagnetischen Wechselfeld Energie zur Versorgung des Datenträgers und verursacht somit eine Lastmodulation. Diese wird jedoch durch die erfindungsgemäße gezielte Ansteuerung des Stromverbrauchers derart verschleiert bzw. zu einer Gesamtlastmodulation ergänzt, dass keine reproduzierbare Korrelation zwischen dem gesendeten Datensignal und dem Gesamtstromverbrauch bzw. der Gesamtlastmodulation besteht. Aus dem gemeinsamen Stromverbrauch der optischen Datensendeeinrichtung und des Stromverbrauchers ist das mit der Datensendeeinrichtung gesendete Datensignal also nicht mehr ableitbar, da aus der Gesamtlastmodulation des elektromagnetischen Wechselfelds nicht, z.B. im Rahmen eines DPA-Angriffs, auf das gesendete Datensignal geschlossen werden kann.

Ein derartiger gemeinsamer Stromverbrauch der optischen Datensendeeinrichtung und des Stromverbrauchers, aus dem das mit der Datensendeeinrichtung gesendete Datensignal nicht ableitbar ist, kann beispielsweise dadurch erreicht werden, dass die Steuereinrichtung den Stromverbraucher mit einem Steuersignal ansteuert, das dem bitweise invertierten Datensignal entspricht. Hierbei wird bei einem Bitwert des Datensignals von 1 (d.h. bei einem Bitwert des Steuersignals von 0) die optische Datensendeeinrichtung, d.h. beispielsweise eine IR-Sendediode, aktiviert und bei einem Bitwert des Datensignals von 0 (bei einem Bitwert des Steuersignals von 1) der Stromverbraucher aktiviert. Somit wird sowohl bei einem Bitwert des Datensignals von 0 als auch von 1 Strom verbraucht, nämlich entweder durch die Datensendeeinrichtung oder den Stromverbraucher. Um die erfindungsgemäße Verschleierung des Datensignals zu erreichen, ist der Stromverbraucher derart eingerichtet, dass er einen annähernd identischen Stromverbrauch hat wie die Datensendeeinrichtung, so dass das gesendete Datensignal bzw. dessen Bitwerte nicht aus dem gemeinsamen Stromverbrauch der optischen Datensendeeinrichtung und des Stromverbrauchers ableitbar ist.

Die optische Datensendeeinrichtung sendet vorzugsweise ein unipolar RZ-kodiertes ("Return to Zero") Datensignal oder ein unipolar NRZ-kodiertes ("Non Return to Zero) Datensignal. Bei einer unipolaren RZ-Kodierung fällt das Datentsignal nach Senden jedes durch ein erkennbar erhöhtes Potential gekennzeichneten Bitwerts von 1 wieder auf ein Nullpotential ab, so dass das Datensignal auch bei zwei aufeinander folgenden Bitwerten von 1 kurz auf das Nullpotential zurückfällt. Bei einem unipolar NRZ-kodierten Datensignal ist dies hingegen nicht der Fall, so dass bei einer unipolaren NRZ-Kodierung das Datensignal zwischen zwei Bitwerten von 1 nicht auf Nullpotential abfällt, sondern solange auf dem erkennbar erhöhten Potential verbleibt, bis ein Bitwert von 0 gesendet wird.

Der Vorteil eines unipolar RZ-kodierten Datensignals im Zusammenhang mit einem gegenüber den Datensignal bitweise invertierten Steuersignal besteht darin, dass bei jedem gesendeten Bit, unabhängig von dessen Bitwert, entweder die optische Datensendeeinrichtung (z.B. eine IR-Sendediode) oder der Stromverbraucher ein- und ausgeschaltet wird. Durch diese notwendigen, regelmäßigen Ein-/ Ausschaltvorgänge bei jedem gesendeten Bitwert ist eine einfache Koordinierung der komplementären Aktivierung der Datensendeeinrichtung und des Stromverbrauchers bzw. deren Synchronisation möglich, da durch das immer wieder auf 0 zurückfallende Potential des Gesamtstromverbrauchs eine unerwünschte kombinierte Aktivierung der Datensendeeinrichtung und des Stromverbrauchers leicht vermieden werden kann.

Bei Verwendung eines unipolar NRZ-kodierten Datensignals im Zusammenhang mit einem gegenüber dem Datensignal bitweise invertierten Steuersignal treten derartige Ein- und Ausschaltvorgänge der Datensendeeinrichtung oder des Stromverbrauchers nur bei einem tatsächlichen Wechsel des Bitwerts von 1 auf 0 oder von 0 auf 1 auf. Bei einem unipolar NRZ-kodierten Datensignal erfolgt die Ansteuerung des Stromverbrauchers durch die Steuereinrichtung mittels des Steuersignals derart präzise, dass sich die Ein- und Ausschaltvorgänge der Datensendeeinrichtung und des Stromverbrauchers nicht in einem kurzzeitigen kombinierten Stromverbrauch der Datensendeeinrichtung und des Stromverbrauchers bemerkbar machen, damit Rückschlüsse auf das gesendete Datensignal aufgrund der lediglich bei einem Wechsel des Bitwerts auftretenden Ein- und Ausschaltvorgänge vermieden werden können. Deshalb erfolgt die Ansteuerung des Stromverbrauchers bei einem unipolar NRZ-kodierten Datensignal derart präzise auf die Aktivität der Datensendeeinrichtung abgestimmt, dass das Ein- bzw. Ausschalten der optischen Datensendeeinrichtung und das Aus- bzw. Einschalten des Stromverbrauchers möglichst zeitgleich erfolgt.

Die Energieempfangseinrichtung des Datenträgers empfängt die für das Senden des Datensignals benötigte Energie vorzugsweise aus einem Sendefeld eines RFID-Lesegeräts ("Radio Frequency Identification"). Insbesondere kann der portable Datenträger mit einer als Energieempfangseinrichtung fungierenden RFID-Kommunikationsschnittstelle ausgestattet sein, die parallel zum optischen Senden von Datensignalen durch die Datensendeeinrichtung eine kontaktlose Datenübertragung mit einem RFID-Lesegerät ermöglicht.

Die optische Datensendeeinrichtung sendet die Daten vorzugsweise im infraroten Spektralbereich. Hierzu sind insbesondere Geräte nach dem IRDA-Standard ("Infrared Data Association") und/oder Geräte nach dem IRFM-Standard ("Infrared Financial Messaging") geeignet. Insbesondere kann eine Infrarot-Sendediode (IR-Sendediode) als optische Datensendeeinrichtung zum Senden von Datensignalen verwendet werden.

Bei Verwendung einer IR-Sendediode als Datensendeeinrichtung wird als Stromverbraucher bevorzugt eine optisch abgeschirmte IR-Diode eingesetzt, die vorzugsweise von einer mit der IR-Sendediode vergleichbaren Bauart ist. Unter einer optisch abgeschirmten IR-Diode ist im Zusammenhang mit der vorliegenden Erfindung eine IR-Diode zu verstehen, von der nahezu keine Infrarotstrahlung nach außen treten kann, so dass die von einer derart abgeschirmten IR-Diode erzeugte Infrarotstrahlung insbesondere nicht von einem Lesegerät als Datensignal empfangen werden kann. Dies hat den Vorteil, dass der Stromverbraucher und die Datensendeeinrichtung sowohl während des Ein- oder Ausschaltens als auch während der dazwischen liegenden Aktivitätsphasen einen nahezu identischen Stromverbrauch bewirken.

Bei Verwendung einer IR-Sendediode als Datensendeeinrichtung und einer optisch abgeschirmten IR-Diode von einer mit der IR-Sendediode vergleichbaren Bauart als Stromverbraucher werden die IR-Sendediode und die optisch abgeschirmte IR-Diode vorzugsweise antiparallel geschaltet. Hierdurch können diese beiden Dioden besonders einfach und über einen gemeinsamen zweiadrigen Anschluss durch Invertieren der Polarität der Versorgungsspannung der antiparallel geschalteten Dioden durch die Steuereinrichtung einzeln angesteuert werden. Bei dieser Verschaltung wird vorzugsweise derselbe Vorwiderstand für die beiden Dioden verwendet, um ein Bauteil einzusparen und um einen möglichst identischen Stromverbrauch der beiden Dioden zu erreichen. Alternativ ist es jedoch auch möglich, die beiden Dioden separat anzusteuern, beispielsweise um besonders schnell zwischen diesen umschalten zu können.

Der Datenträger verfügt vorzugsweise außerdem über eine optische Datenempfangseinrichtung zum Empfang eines optischen Datensignals, um eine bidirektionale optische Datenkommunikation zu ermöglichen. Die optische Datenempfangseinrichtung ist vorzugsweise derart ausgestaltet, dass sie Datensignale im infraroten Spektralbereich empfängt. Hierbei wird vorzugsweise die mittels der Energieempfangseinrichtung empfangene Energie auch zum Betreiben der Datenempfangseinrichtung genutzt. Als optische Datenempfangseinrichtung kann ein Photohalbleiter, insbesondere eine IR-Empfangsdiode bzw. eine IR-Photodiode verwendet werden.

Der erfindungsgemäße Datenträger kann insbesondere eine Smart-Card, eine Chipkarte mit Bezahlfunktion oder ein sonstiger derartiger portabler Datenträger mit Rechenkapazität sein.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die schematisch zeigen:
- Fig.1: einen erfindungsgemäßen portablen Datenträger;
- Fig. 2 (a, b): den Absolutbetrag des Stromflusses durch (a) die IR-Sende- diode und (b) die optisch abgeschirmte IR-Diode des Datenträ- gers gemäß Fig.1 als Funktion der Zeit bei Verwendung eines unipolar RZ-kodierten Datensignals;

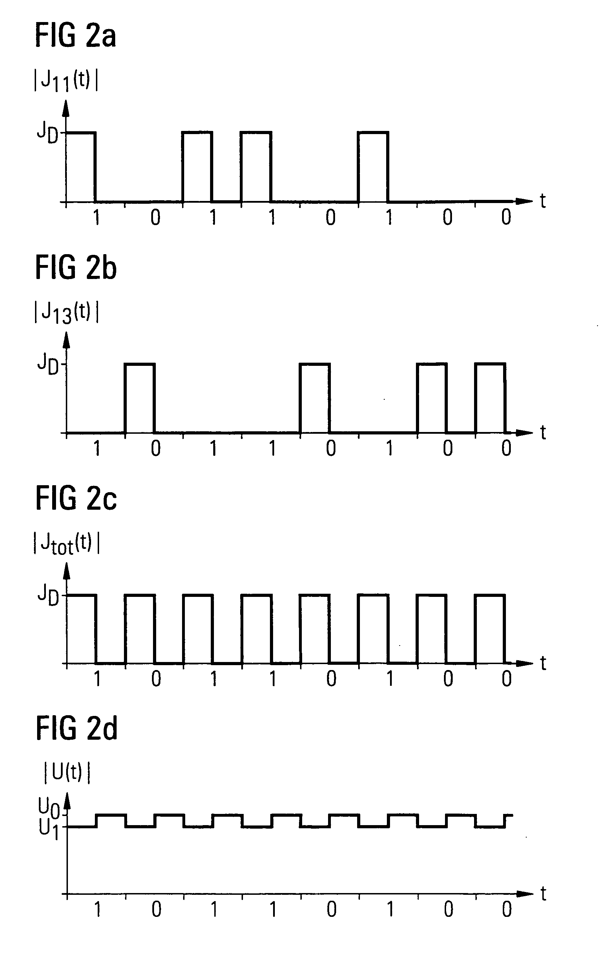

- Fig. 2 (c, d): den Absolutbetrag des resultierenden Gesamtstromflusses (c) durch die IR-Sendediode und die IR-Diode und den Absolutbe- trag (d) der aus einem durch den Stromverbrauch der IR- Sendediode und die IR-Diode modulierten Sendefeld eines RFID-Lesegeräts empfangenen Versorgungsspannung;

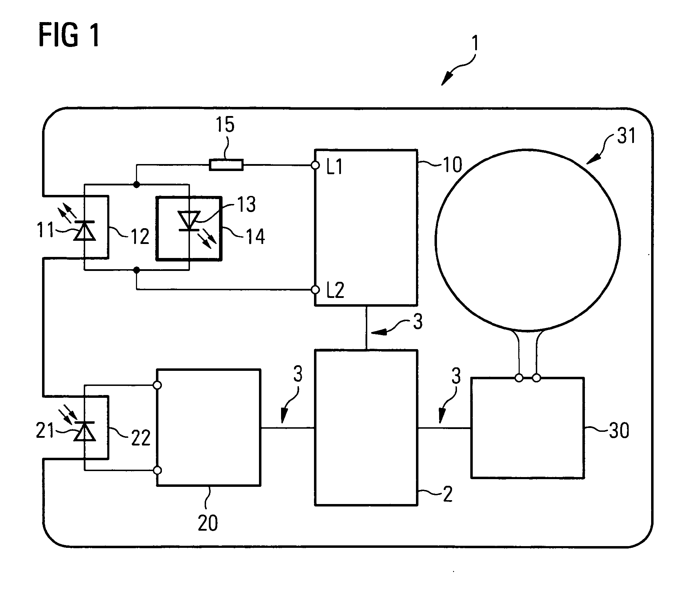

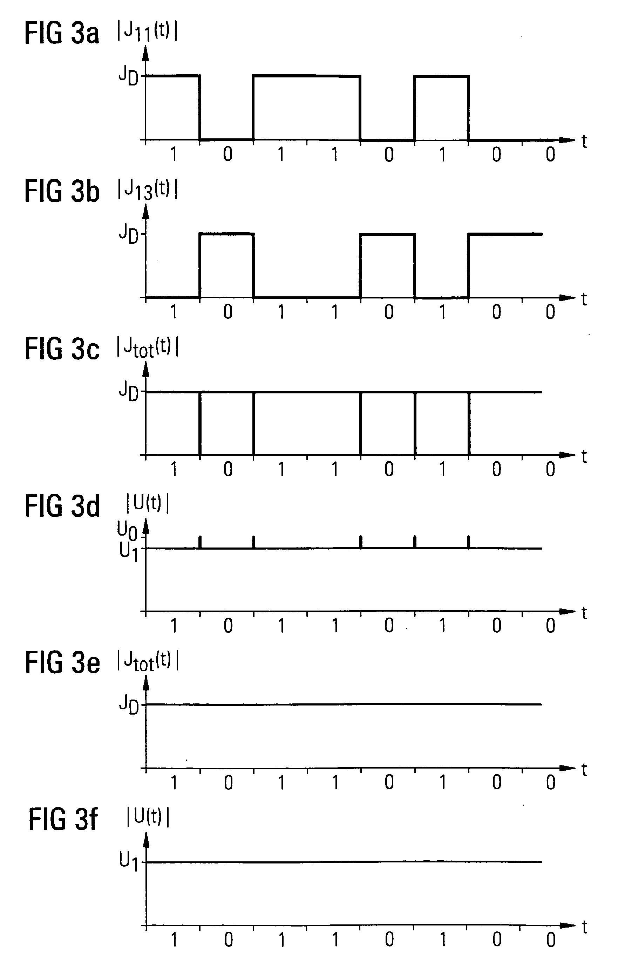

- Fig. 3 (a, b): den Absolutbetrag des Stromflusses durch (a) die IR-Sende- diode und (b) die optisch abgeschirmte IR-Diode des Datenträ- gers gemäß Fig. 1 als Funktion der Zeit bei Verwendung eines unipolar NRZ-kodierten Datensignals;
- Fig. 3 (c, d): den Absolutbetrag des resultierenden Gesamtstromflusses (c) durch die IR-Sendediode und die IR-Diode und den Absolutbe- trag (d) der aus einem durch den Stromverbrauch der IR- Sendediode und die IR-Diode modulierten Sendefeld eines RFID-Lesegeräts empfangenen Versorgungsspannung für den Fall, dass die Ein- und Ausschaltvorgänge der IR-Sendediode und der IR-Diode in (c) und (d) erkennbar sind; und
- Fig. 3 (e, f): analog zu (c) den Absolutbetrag des resultierenden Gesamt- stromflusses (e) und analog zu (d) den Absolutbetrag (f) der aus dem modulierten Sendefeld eines RFID-Lesegeräts emp- fangenen Versorgungsspannung für den Fall, dass die IR- Sendediode und die IR-Diode so angesteuert werden, dass die Ein- und Ausschaltvorgänge der IR-Sendediode und der IR- Diode in (e) und (f) nicht erkennbar sind;

Fig.1 zeigt schematisch einen erfindungsgemäßen portablen Datenträger 1, z.B. eine Smart-Card oder eine Chipkarte mit Bezahlfunktion oder einen sonstigen derartigen portablen Datenträger. Der Datenträger 1 umfasst eine Zentraleinheit 2, die über Daten- und Energieversorgungsbusse 3 mit einer Steuereinrichtung 10 zum Ansteuern einer optischen Datensendeeinrichtung 11, einer Datenempfangssteuereinrichtung 20 zum Ansteuern einer optischen Datenempfangseinrichtung 21 und einer Kontaktlosschnittstelle 30 mit Transponderspule 31 verbunden ist.

Die Zentraleinheit 2 kann insbesondere einen Speicher (nicht dargestellt) und eine CPU (nicht dargestellt), mittels der in dem Speicher gespeicherte Applikationen ausgeführt werden, und/oder einen Sicherheitschip (nicht dargestellt) umfassen.

Die Kontaktlosschnittstelle 30 mit Transponderspule 31 empfängt Energie aus dem Sendefeld eines RFID-Lesegeräts (nicht dargestellt) mit der neben der Kontaktlosschnittstelle 30 über die Daten- und Energieversorgungsbusse 3 auch die Zentraleinheit 2, die Steuereinrichtung 10 und die Datenempfangssteuereinrichtung 20 versorgt werden. Zudem kann die Zentraleinheit 2 durch Ansteuern der Kontaktlosschnittstelle 30 über die Daten- und Energieversorgungsbusse 3 mittels der Transponderspule 31 Daten an ein RFID-Lesegerät (nicht dargestellt) senden und von diesem empfangen.

Die optische Datensendeeinrichtung 11 ist im vorliegenden Ausführungsbeispiel als IR-Sendediode (Infrarotdiode) 11 ausgestaltet, die in einem Abschnitt 12 des Datenträgers 1 angebracht ist, aus dem die von der IR-Sendediode 11 erzeugte Infrarotstrahlung aus dem Datenträger 1 austritt und von einem geeigneten Lesegerät (z.B. einem IRDA- oder einem IRFM-Gerät, nicht dargestellt) als Datensignal empfangen werden kann. Antiparallel zu der als Datensendeeinrichtung 11 dienenden IR-Sendediode 11 ist eine IR-Diode 13 geschaltet, die zu der IR-Sendediode 11 baugleich ist und als Stromverbraucher 13 dient. Im Unterschied zu der IR-Sendediode 11 ist die IR-Diode 13 jedoch in einem optisch abgeschirmten Abschnitt 14 des Gehäuses angebracht, aus dem keine Infrarotstrahlung austritt, so dass die von der abgeschirmten IR-Diode 13 erzeugte Infrarotstrahlung von einem Lesegerät nicht als Datensignal empfangen werden kann.

Die IR-Sendediode 11 und die IR-Diode 13 sind über einen gemeinsamen Vorwiderstand 15 an die Ausgänge L1 und L2 der Steuereinrichtung 10 angeschlossen, die die IR-Sendediode 11 und die IR-Diode 13 ansteuert. Durch Ansteuern der Steuereinrichtung 10 über die Daten- und Energieversorgungsbusse 3 kann die Zentraleinheit 2 mittels der IR-Sendediode 11 Daten an ein geeignetes Lesegerät senden.

Die Steuereinrichtung 10 steuert beim Senden eines von der Zentraleinheit 2 generierten Datensignals neben der IR-Sendediode 11 auch den Stromverbraucher 13 über ein geeignetes Steuersignal an. Dies erfolgt derart, dass aus einem gemeinsamen Stromverbrauch der IR-Sendediode 11 und der IR-Diode 13 das mit der IR-Sendediode 11 gesendete Datensignal nicht ableitbar ist. Hierzu steuert die Steuereinrichtung 10 die als Stromverbraucher 13 dienende IR-Diode 13 mit einem Steuersignal an, das dem bitweise invertierten Datensignal entspricht.

Um bei der Ansteuerung einen Stromfluss durch die IR-Sendediode 11 zu bewirken, wird der Ausgang L1 der Steuereinrichtung 10 auf Nullpotential (Erde) gelegt und der Ausgang L2 der Steuereinrichtung 10 auf ein festgelegtes erkennbar erhöhtes, positives Potential. Um hingegen einen komplementären Stromfluss durch die IR-Diode 13 zu bewirken, wird der Ausgang L2 der Steuereinrichtung 10 auf Nullpotential (Erde) gelegt und der Ausgang L1 der Steuereinrichtung 10 auf das zuvor genannte festgelegte positive Potential.

Die beiden Ausgänge L1 und L2 der Steuereinrichtung 10 sind vom gleichen Typ und auf demselben Steuerchip (nicht dargestellt) der Steuereinrichtung 10 integriert und weisen somit nur eine geringe Toleranzabweichung voneinander auf. Somit kann ein nahezu identischer Stromfluss entweder durch die IR-Sendediode 11 oder durch die zu der IR-Sendediode 11 baugleichen IR-Diode 13 bewirkt werden. Bei den Ausgängen L1 und L2 handelt es sich bevorzugt um Push-Pull-Ausgänge.

Die Zentraleinheit 2 kann außerdem mittels der optischen Datenempfangseinrichtung 21, die in Fig. 1 als IR-Empfangsdiode (IR-Photodiode) 21 ausgestaltet ist, Daten empfangen. Die IR-Empfangsdiode 21 ist an die Datenempfangssteuereinrichtung 20 angeschlossen und wird von dieser angesteuert. Die Datenempfangssteuereinrichtung 20 wird wiederum über die Daten- und Energieversorgungsbusse 3 von der Zentraleinheit 2 angesteuert. Die IR-Empfangsdiode 21 ist in einem Abschnitt 22 des Datenträgers angebracht, in dem von einem geeigneten Sendegerät erzeugte Infrarotstrahlung von der IR-Empfangsdiode 21 empfangen werden kann.

Alternativ zu einer optischen Datensendeeinrichtung 11 und einer separaten optischen Datenempfangseinrichtung 21 kann der Datenträger 1 auch mit einer zwischen Sende- und Empfangsbetrieb umschaltbaren optischen Sende- und Empfangsvorrichtung versehen sein.

Gemäß weiterer Ausführungsvarianten kann der Datenträger 1 zusätzlich noch weitere Schnittstellen besitzen, z.B. eine kontaktbehaftete Schnittstelle (ggf. nach dem ISO 7816 Standard) und/ oder eine kontaktlose (Funk-) Schnittstelle. Gemäß einer besonderen Ausführungsvariante kann ein Ausgang L1, L2 der Steuereinrichtung 10 zur Ansteuerung einer solchen weiteren Schnittstelle verwendet werden. Hierbei wird vorzugsweise der nicht zur Ansteuerung der weiteren Schnittstelle verwendete Ausgang L1, L2 der Steuereinrichtung 10 während der Datenkommunikation über die weitere Schnittstelle in einen hochohmigen Zustand geschaltet. Dadurch wird jeglicher Stromfluss durch die IR-Sendediode 11 und die IR-Diode 13 unterbunden und eine Kommunikation über die weitere Schnittstelle ohne Aktivierung der IR-Sendediode 11 oder der IR-Diode 13 ermöglicht. Auch ist es möglich, den Datenträger 1 über eine kontaktbehaftete Schnittstelle mit Energie zu versorgen, sobald ein hierfür geeignetes Lesegerät an die kontaktbehaftete Schnittstelle angeschlossen wird.

Gemäß einer alternativen Ausführungsvariante wird einer der Ausgänge L1, L2 der Steuereinrichtung mit einem Anschluss der Datensendeeinrichtung 11 und der andere der Ausgänge L1, L2 mit einem Anschluss des Stromverbrauchers 13 beschaltet und der jeweils andere Anschluss der Datensendeeinrichtung 11 und des Stromverbrauchers 13, ggf. über jeweils einen oder denselben Vorwiderstand, auf Masse (oder auch auf ein konstantes Potential) gelegt. Dies ermöglicht insbesondere ein besonders schnelles Umschalten zwischen der Datensendeeinrichtung 11 und dem Stromverbraucher 13. Bei dieser Ausführungsvariante kann jedoch nicht ohne weiteres wie zuvor dargestellt einer der Ausgänge L1 oder L2 zur Kommunikation über eine weitere Schnittstelle verwendet werden, ohne dass dabei der Stromverbraucher 13 oder die Datensendeeinrichtung 11 aktiviert wird.

Als Stromverbraucher 13 kann auch ein Widerstand oder ein anderer Stromverbraucher verwendet werden.

Auch besteht die Möglichkeit, dass die Steuereinrichtung 10 den Stromverbraucher 13 nicht nur ein- und ausschaltet, sondern den Stromfluss durch den Stromverbraucher 13 gezielt regelt, so dass aus einem gemeinsamen Stromverbrauch der Datensendeeinrichtung 11 und des Stromverbrauchers 13 das mit der Datensendeeinrichtung 11 gesendete Datensignal nicht ableitbar ist.

Zum Senden der Daten wird gemäß einer ersten Ausführungsvariante ein unipolar RZ-kodiertes Signal verwendet. Fig. 2 zeigt beispielhaft (a) den Absolutbetrag des Stromflusses |J₁₁(t)| durch die IR-Sendediode 11 und (b) den Absolutbetrag des Stromflusses |J₁₃(t)| durch die optisch abgeschirmte IR-Diode 13 als Funktion der Zeit bei Verwendung eines unipolar RZ-kodierten Datensignals. Die als Stromverbraucher 13 dienende IR-Diode 13 wird mit einem Steuersignal angesteuert, das dem bitweise invertierten Datensignal entspricht. In der Folge wird bei einem Bitwert 1 die IR-Sendediode 11 aktiviert (|J₁₁(t)| =J_{D}; |J₁₃(t)| =0) und bei einem Bitwert von 0 die IR-Diode 13 (|J₁₁(t)| =0; |J₁₃(t)| =J_{D}). Somit wird sowohl bei einem Bitwert von 0 als auch von 1 entweder die IR-Sendediode 11 oder die IR-Diode 13 aktiviert. Da die IR-Sendediode 11 und die IR-Diode 13 baugleich und die beiden Ausgänge L1 und L2 der Steuereinrichtung vom gleichen Typ sind, nimmt der Absolutbetrag des Stromflusses |J₁₃(t)| durch die aktivierte IR-Diode 13 denselben Wert J_{D} an wie der Stromfluss |J₁₁(t)| durch die IR-Sendediode 11, wenn diese aktiviert ist.

Aus dem in Fig. 2 (c) dargestellten Absolutbetrag des resultierenden GesamtStromflusses |Jₜₒₜ(t)| durch die IR-Sendediode 11 und die IR-Diode 13 ist daher das Datensignal nicht ableitbar.

In Fig. 2 (d) ist der Absolutbetrag einer aus dem Sendefeld eines RFID-Lesegeräts empfangenen Spannung |U|, der Aufschluss über die Stärke des Sendefeldes gibt, dargestellt, wobei das Sendefeld des RFID-Lesegeräts durch den Stromverbrauch des Datenträgers 1 und damit der IR-Sendediode 11 und der IR-Diode 13 moduliert wird. Zwar schwankt |U| zwischen den Werten Uo und U₁, jedoch ist aus dieser rein periodischen Modulation das Datensignal nicht ableitbar.

Die Aktivierungsdauer der IR-Sendediode 11 und der IR-Diode 13 muss bei einem RZ-Signal nicht zwangsweise wie in Fig. 2 dargestellt die halbe Übertragungsdauer eines Bits betragen, sondern kann jeden Wert annehmen, der geringer als die Übertragungsdauer eines Bits ist.

Zum Senden des Datensignals wird gemäß einer weiteren Ausführungsvariante ein unipolar NRZ-kodiertes Signal verwendet. Fig. 3 zeigt beispielhaft (a) den Absolutbetrag des Stromflusses |J₁₁(t)| durch die IR-Sendediode 11 und (b) den Absolutbetrag des Stromflusses |J₁₃(t)| durch die optisch abgeschirmte IR-Diode 13 als Funktion der Zeit bei Verwendung eines unipolar NRZ-kodierten Datensignals. Wie im Zusammenhang mit Fig. 2 für den Fall eines unipolar RZ-kodierten Datensignals ausgeführt, wird auch bei dem unipolar NRZ-kodierten Datensignal erfindungsgemäß bei einem Bitwert von 1 die IR-Sendediode 11 aktiviert (|J₁₁(t)| =J_{D}; |J₁₃(t)| =0) und bei einem Bitwert von 0 die mit dem bitweise invertierten Datensignal angesteuerte IR-Diode 13 (|J₁₁(t)| =0; |J₁₃(t)| = J_{D}), wobei der Stromfluss durch die aktivierte IR-Diode 13 denselben Wert J_{D} annimmt wie der Stromfluss durch die IR-Sendediode 11, wenn diese aktiviert ist.

Anhand des in Fig. 3 (c) dargestellten Absolutbetrags des resultierenden Gesamtstromflusses |Jₜₒₜ(t)| durch die IR-Sendediode 11 und die IR-Diode 13 sind die Ein- und Ausschaltvorgänge der IR-Sendediode 11 und der IR-Diode 13 erkennbar. Hieraus können prinzipiell Rückschlüsse auf das gesendete Datensignal gezogen werden, da die Ein- und Ausschaltvorgänge der Datensendeeinrichtung 11 bzw. des Stromverbrauchers 13 nur bei einem Wechsel des Bitwerts auftreten.

Dies gilt in der Folge auch für den in Fig. 3 (d) dargestellten Absolutbetrag einer aus dem durch den Stromverbrauch eines entsprechenden Datenträgers 1 modulierten Sendefeld eines RFID-Lesegeräts empfangenen Spannung |U|. Aus den Schwankungen von |U| zwischen den Werten U₀ und U₁ ist ein Wechsel des Bitwerts prinzipiell erkennbar.

Dass die Ein- und Ausschaltvorgänge der IR-Sendediode 11 und der IR-Diode 13 am kombinierten Stromverbrauch |Jₜₒₜ(t)| der IR-Sendediode 11 und der IR-Diode 13 erkennbar sind, kann insbesondere daran liegen, dass bei einem Wechsel des Bitwerts nicht zeitgleich bzw. schnell genug zwischen dem Betrieb der IR-Sendediode 11 und der IR-Diode 13 umgeschaltet wird. Dies kann insbesondere dann der Fall sein, wenn die Steuereinrichtung 10 mehrere Befehlszyklen für den Umschaltvorgang benötigt.

Daher erfolgt bei Verwendung eines unipolar NRZ-kodierten Datensignals das Ausschalten der optischen Datensendeeinrichtung 11 und das Einschalten des Stromverbrauchers 13, bzw. das Ausschalten des Stromverbrauchers 13 und das Einschalten der Datensendeeinrichtung 11 durch die Steuereinrichtung 10 möglichst zeitgleich. Dies kann beispielsweise durch Verwendung einer ausreichend schnellen Steuereinrichtung 10 erreicht werden. Hierzu kann es auch erforderlich sein, wie zuvor erläutert, einen der Ausgänge L1, L2 der Steuereinrichtung 10 mit einem Anschluss der Datensendeeinrichtung 11 und den anderen Ausgang L2, L1 mit einem Anschluss des Stromverbrauchers 13 zu beschalten und den jeweils anderen Anschluss der Datensendeeinrichtung 11 und des Stromverbrauchers 13 auf Masse (oder auch auf ein konstantes Potential) zu legen, um ein besonders schnelles Umschalten zwischen Datensendeeinrichtung 11 und Stromverbraucher 13 zu ermöglichen. Auch können kurzzeitige Schwankungen des Stromverbrauchs des Datenträgers 1 durch einen Kondensator kompensiert werden.

Fig. 3 (e) zeigt in Analogie zu Fig. 3 (c) den Absolutbetrag des Gesamtstromflusses |Jₜₒₜ(t)| durch die IR-Sendediode 11 und die IR-Diode 13 für den Fall, dass ein konstanter Gesamtstromfluss durch die IR-Sendediode 11 und die IR-Diode 13 durch ein nahezu zeitgleiches Ein- und Ausschalten der IR-Sendediode 11 und der IR-Diode 13 mittels einer ausreichend schnellen Steuereinrichtung 10 sichergestellt wird, so dass anhand des Gesamtstromflusses |Jₜₒₜ(t)| die Ein- und Ausschaltvorgänge der IR-Sendediode 11 und der IR-Diode 13 nicht erkennbar sind.

In Fig. 3 (f) ist der Absolutbetrag einer aus dem durch den Stromverbrauch eines entsprechenden Datenträgers 1 modulierten Sendefeld eines RFID-Lesegeräts empfangenen Spannung |U| dargestellt. Da |U| den konstanten Wert U₁ annimmt, kann aus |U| kein Rückschluss auf die gesendeten Daten gezogen werden.

Zur Kodierung des Datensignals ist auch die Verwendung eines Miller-Codes oder die Verwendung einer Bi-phase-Kodierung denkbar.

## Patentansprüche

1. Verfahren auf einem portablen Datenträger (1), umfassend ein Empfangen von Energie mittels einer Energieempfangseinrichtung (30, 31) und ein Senden eines Datensignals mittels einer optischen Datensendeeinrichtung (11) unter Verwendung der empfangenen Energie, **gekennzeichnet durch** ein Ansteuern eines Stromverbrauchers (13) mittels einer Steuereinrichtung (10), derart, dass aus einem gemeinsamen Stromverbrauch der optischen Datensendeeinrichtung (11) und des Stromverbrauchers (13) das mit der optischen Datensendeeinrichtung (11) gesendete Datensignal nicht ableitbar ist.

2. Verfahren nach Anspruch 1, **dadurch gekennzeichnet, dass** die Steuereinrichtung (10) den Stromverbraucher (13) mit einem Steuersignal ansteuert, das dem bitweise invertierten Datensignal entspricht.

3. Verfahren nach Anspruch 1 oder 2, **dadurch gekennzeichnet, dass** ein unipolar RZ-kodiertes Datensignal oder ein unipolar NRZ-kodiertes Datensignal gesendet wird.

4. Verfahren nach einem der Ansprüche 1 bis 3, **dadurch gekennzeichnet, dass** die Energie aus einem Sendefeld eines RFID-Lesegeräts empfangen wird.

5. Verfahren nach einem der Ansprüche 1 bis 4, **dadurch gekennzeichnet, dass** das Datensignal im infraroten Spektralbereich gesendet wird.

6. Verfahren nach einem der Ansprüche 1 bis 5, **dadurch gekennzeichnet, dass** das Datensignal mittels einer IR- Sendediode (11) als optische Datensendeeinrichtung gesendet wird und die Steuereinrichtung (10) eine optisch abgeschirmte IR-Diode (13) als Stromverbraucher ansteuert.

7. Verfahren nach einem der Ansprüche 1 bis 6, **dadurch gekennzeichnet, dass** ein Datensignal mittels einer optischen Datenempfangseinrichtung (21) empfangen wird.

8. Portabler Datenträger 1, umfassend eine Energieempfangseinrichtung (30, 31) zum Empfangen von Energie, eine optische Datensendeeinrichtung (11) zum Senden eines Datensignals unter Verwendung der empfangenen Energie und einen Stromverbraucher (13), **gekennzeichnet durch** eine Steuereinrichtung (10), die eingerichtet ist, den Stromverbraucher (13) derart anzusteuern, dass aus einem gemeinsamen Stromverbrauch der optischen Datensendeeinrichtung (11) und des Stromverbrauchers (13) ein mit der Datensendeeinrichtung (11) gesendetes Datensignal nicht ableitbar ist.

9. Datenträger nach Anspruch 8, **dadurch gekennzeichnet, dass** die Steuereinrichtung (10) eingerichtet ist, den Stromverbraucher (13) mit einem Steuersignal anzusteuern, das dem bitweise invertierten Datensignal entspricht.

10. Datenträger nach Anspruch 8 oder 9, **dadurch gekennzeichnet, dass** die optische Datensendeeinrichtung (11) eingerichtet ist, ein unipolar RZ-kodiertes Datensignal oder ein unipolar NRZ-kodiertes Datensignal zu senden.

11. Datenträger nach einem der Ansprüche 8 bis 10, **dadurch gekennzeichnet, dass** die Energieempfangseinrichtung (30, 31) eingerichtet ist, Energie aus einem Sendefeld eines RFID-Lesegeräts zu empfangen.

12. Datenträger nach einem der Ansprüche 8 bis 11, **dadurch gekennzeichnet, dass** die optische Datensendeeinrichtung (11) eine IR- Sendediode (11) ist und der Stromverbraucher (13) eine optisch abgeschirmte IR-Diode (13) von einer mit der IR-Sendediode (11) vergleichbaren Bauart ist.

13. Datenträger nach Anspruch 12, **dadurch gekennzeichnet, dass** die IR-Sendediode (11) und die als Stromverbraucher (13) verwendete optisch abgeschirmte IR-Diode (13) antiparallel geschaltet sind.

14. Datenträger nach einem der Ansprüche 8 bis 13, **gekennzeichnet durch** eine optische Datenempfangeseinrichtung zum Empfangen eines Datensignals, vorzugsweise **durch** eine IR-Empfangsdiode (21).

15. Datenträger nach einem der Ansprüche 8 bis 14, **dadurch gekennzeichnet, dass** der Datenträger (1) eine Smart-Card oder eine Chipkarte mit Bezahlfunktion ist.
